# DEMANDE DE BREVET EUROPEEN

(11) **EP 1 837 247 A1**
(43) Date de publication de la demande: **26.09.2007**
(21) Numéro de dépôt: 07300859.1
(22) Date de dépôt: 13.03.2007
(51) Int. Cl.: B60R 21/01, G01P 15/00

(54) **Capteur de détection d'impact pour véhicule et procédé de fabrication utilisant un tel capteur**

(30) Priorité: 21.03.2006 FR 0602445
(71) Demandeur: PEUGEOT CITROËN AUTOMOBILES SA, 78140 Vélizy Villacoublay (FR)
(72) Inventeur: Periot, Stéphanie, 75014 Paris (FR); Verhoest, Florence, 91190 Gif sur Yvette (FR); Perus, Vincent, 25400 Audincourt (FR)

(57) **Abrégé**

L'invention concerne un capteur (1) de détection d'impact pour véhicule, comprenant : un élément de détection d'impact selon une direction de détection ; au moins deux moyens (2, 5) distincts de maintien en position du capteur ; dans lequel : les deux moyens (2, 5) distincts de maintien en position s'étendent dans un plan (X, Y) du capteur ; et la direction de détection est dans ce plan (X, Y) ou parallèle à ce plan. Ces moyens distincts de maintien en position sont par exemple un système de pré-maintien (2) et un système de fixation (5).

L'invention propose également un procédé de fabrication d'un véhicule, comprenant une étape de : montage de deux capteurs (1) selon l'une quelconque des revendications précédentes, sur des structures d'accueil de capteur respectives d'un véhicule.

## Description

La présente invention concerne un capteur de détection d'impact pour véhicule ainsi qu'un procédé de fabrication d'un véhicule utilisant un tel capteur.

Dans le domaine de la sécurité passive, on utilise des capteurs de détection d'impact ou chocs (frontaux, latéraux). Les capteurs comprennent par exemple des accéléromètres, des capteurs de pression, etc.

Un accéléromètre est un capteur d'accélération. Certains accéléromètres utilisent la technologie MEMS (pour microelectromechanical system/device ou microsystème électromécanique), c'est-à-dire un système intégrant, à une échelle micrométrique, des dispositifs mécaniques et électroniques sur une puce, servant à assurer une fonction donnée.

Un capteur de pression est un dispositif sensible à la pression, produisant un signal électrique, typiquement proportionnel à la pression. Ce signal vient par exemple alimenter un instrument de mesure ou un appareil de contrôle. Un capteur de pression est généralement constitué d'un organe qui se déforme sous l'action de la pression à mesurer.

Le document WO 2005/007460 divulgue un détecteur d'impact destiné à un véhicule à moteur. Ce détecteur comprend un premier ensemble de capteurs comprenant un capteur respectif à chaque côté du véhicule. Chaque capteur consiste en un accéléromètre et comporte un axe de détection prédéfini. Chaque capteur est monté sur le véhicule à proximité de la carrosserie extérieure du véhicule et au niveau d'une première position longitudinale de sorte que l'axe de détection de chaque capteur produise un angle prédéfini par rapport à l'axe longitudinal du véhicule. L'angle prédéfini se situe entre 30° et 60°, ou entre -30° et -60°. Les axes de détection sont un miroir symétrique l'un de l'autre par rapport à l'axe longitudinal du véhicule, de sorte qu'au niveau de la première position longitudinale, se trouvent uniquement les deux capteurs respectifs, les axes de détection des deux capteurs s'étendant dans des directions différentes.

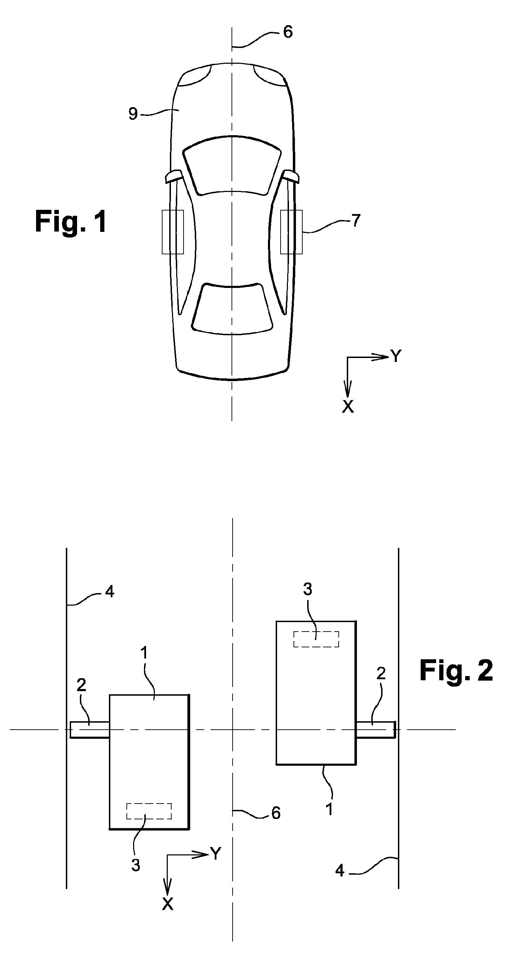

A titre d'illustration, la figure 1 représente schématiquement un véhicule vu de haut, dans le plan (X, Y), la direction longitudinale du véhicule étant selon X.

Certains capteurs utilisés à l'heure actuelle nécessitent un encombrement double dans la structure de véhicule prévue pour accueillir ces capteurs. La structure d'accueil peut par exemple être prévue au niveau d'un longeron, d'un pied milieu/arrière ou au niveau d'une porte du véhicule.

Ceci est illustré sur la figure 2, laquelle représente schématiquement les encombrements de capteurs de détection d'impact dans une structure d'accueil de capteur d'un véhicule, dans le plan (X, Y). La figure n'est évidement pas à l'échelle. Outre l'axe longitudinal 6, sont représentés deux capteurs 1 de détection, munis chacun d'un pion 2 anti-rotation ou de pré-maintien ainsi que d'une connectique 3 de capteur orientée vers le bas (du côté Z<0, c'est-à-dire du côté en dessous du plan de la figure). Chaque capteur 1 comprend également un système de fixation (non représenté). Chaque capteur comprend encore un élément sensible de détection de chocs frontaux ou latéraux. L'encombrement que nécessitent de tels capteurs est double ; c'est-à-dire qu'il faut réserver un espace de chaque côté de la ligne pointillée dirigée selon Y, pour accueillir chacun des capteurs 1.

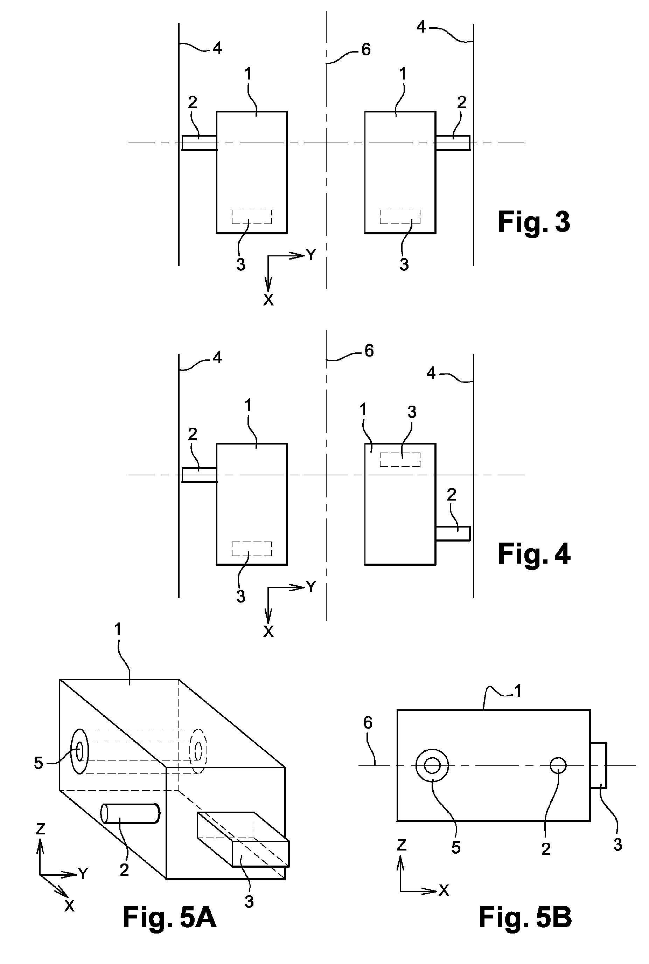

Afin d'éviter un encombrement double, tel qu'illustré plus haut, on peut envisager de réaliser deux capteurs différents, en fonction du côté auquel il est destiné. Ceci est illustré à la figure 3. Deux capteurs 1 de détection sont représentés, munis chacun d'un pion 2 anti-rotation ou de pré-maintien et d'une connectique 3 orientée vers le bas (Z<0), ainsi que d'un système de fixation (non représenté sur la figure 3). Le capteur à gauche diffère du capteur à droite : les capteurs ont ici des conceptions miroirs l'une de l'autre, par rapport au plan transverse selon X. Toutefois, la structure d'accueil peut dans ce cas être symétrique par rapport à ce même plan. Sur la figure 3, cela revient à dire que la structure dans le plan (X, Y) est symétrique par rapport à l'axe X.

Une autre façon d'éviter un encombrement double est de prévoir une diversité de structure sur la caisse du véhicule, comme illustré à la figure 4. Sur cette figure, les structures d'accueil de capteur, à gauche et à droite du véhicule, ne sont pas symétriques l'une de l'autre par rapport à l'axe X. Or, une telle solution n'est parfois pas souhaitable, surtout lorsqu'il n'est pas possible de prévoir une diversité de structure sur la caisse du véhicule, pour des raisons de productions.

Ainsi, chacune des solutions discutées ci-dessus présente des inconvénients (figures 3 et 4). D'une part, elles ne permettent pas, avec des capteurs d'un même type, d'éviter un encombrement double dans la structure d'accueil du véhicule ; et d'autre part, elles imposent une diversité de capteur si on veut une structure d'accueil symétrique. Il existe donc un besoin pour un capteur de détection d'impact ainsi qu'un procédé de fabrication d'un véhicule permettant d'éviter ces inconvénients. Ce capteur devrait en outre permettre une détection d'impact selon une direction orientée par rapport à l'axe longitudinal (pas seulement) du véhicule.

L'invention a ainsi pour objet un capteur de détection d'impact pour véhicule, comprenant : un élément de détection d'impact selon une direction de détection ; au moins deux moyens distincts de maintien en position du capteur ; dans lequel : les deux moyens distincts de maintien en position s'étendent dans un plan (X, Y) du capteur ; et la direction de détection est dans ce plan (X, Y) ou parallèle à ce plan.

Dans des modes de réalisation préférés, le capteur selon l'invention comprend une ou plusieurs des caractéristiques suivantes :
- le plan (X, Y) est un plan médian du capteur;
- le capteur comprend en outre une connectique, s'étendant également dans le plan (X, Y);
- l'un, au moins, des moyens distincts de maintien en position s'étend symétriquement par rapport au plan (X, Y) ;
- les moyens de maintien en position comprennent : des moyens de positionnement ; et des moyens de fixation ;
- les moyens de positionnement comprennent un pion de centrage ou de pré-maintien ;
- les moyens de fixation comprennent un système de fixation par vis comprenant un trou débouchant sur deux côtés du capteur ;
- l'élément de détection d'impact est un élément microélectronique noyé dans une matrice, sensible à une décélération selon la direction de détection.

L'invention propose en outre un procédé de fabrication d'un véhicule, comprenant une étape de : montage de deux capteurs selon l'invention, sur des structures d'accueil de capteur respectives d'un véhicule. De préférence, les structures d'accueil sont symétriques par rapport à un plan transverse longitudinal du véhicule.

D'autres caractéristiques et avantages de l'invention apparaîtront à la lecture de la description détaillée qui suit des modes de réalisation de l'invention, donnés à titre d'exemple uniquement et en référence aux dessins annexés, qui montrent :
- Figure 1 : un véhicule vu de haut, dans le plan (X, Y), la direction longitudinale du véhicule étant selon X ;
- Figures 2, 3 et 4 : des représentations schématiques partielles en coupe dans un plan (X, Y) de structures d'accueil de capteurs dans un véhicule, selon l'art antérieur ; et
- Figures 5A et 5B: un schéma simplifié d'un capteur de détection d'impact selon l'invention, vu en perspective et de côté, respectivement ; et
- Figures 6 à 8, des représentations schématiques partielles en coupe dans un plan (X, Y) de capteurs et de structures d'accueil de ces capteurs, selon des modes distincts de réalisation de l'invention.

L'invention propose un capteur de détection d'impact pour véhicule, qui comprend un élément de détection d'impact, selon une direction de détection, et au moins deux moyens distincts de maintien en position du capteur. Ces deux moyens distincts s'étendent dans un plan (X, Y) du capteur (c'est-à-dire un plan passant par le capteur). Egalement, la direction de détection est dans ce plan (X, Y) ou parallèle à ce plan. Ces deux moyens distincts de maintien en position du capteur comprennent par exemple un système de pré-maintien 2 et un système de fixation 5.

De la sorte, après une rotation de 180° du capteur tel que défini ci-dessus autour de l'axe X, les moyens distincts de maintien en position se retrouvent dans une configuration symétrique, par rapport à l'axe X. Des capteurs de ce type peuvent donc être montés indifféremment d'un côté ou de l'autre sur une structure d'accueil symétrique par rapport à l'axe X (ou plus généralement par rapport au plan transverse contenant l'axe X). On peut donc, avec des capteurs d'un même type, éviter un encombrement double et éviter de prévoir une diversité de structure d'accueil sur véhicule.

En outre, comme la direction de détection est aussi dans le plan (X, Y), après rotation du capteur, la direction de détection se retrouve en position miroir de la direction initiale (le cas échéant à une translation près, si la direction de détection est prévue parallèle au plan (X, Y) du capteur). Ceci permet donc d'obtenir un modèle de détecteur qui soit compatible avec des éléments de détection d'impact selon une direction orientée par rapport à l'axe longitudinal du véhicule (par exemple à 45°).

Ceci n'était pas possible avec les capteurs de l'art antérieur discutés ci-dessus. Pour permettre une détection orientée, les capteurs de l'art antérieur doivent en effet être différents à gauche et à droite. En effet, si un même capteur doit être utilisé pour chacun des côtés du véhicule, il faut le tourner de 180° dans le plan (X, Y), autour de l'axe Z (formant un trièdre avec X et Y). La direction de détection ne peut par conséquent pas être symétrique par rapport à l'axe X, sauf dans les cas où cette direction est parallèle à l'axe X ou Y. Cependant, dans de tels cas, le sens de détection se retrouve inversé, ce qui peut être gênant avec certains détecteurs. En effet, une direction dans le plan (X, Y) se retrouve, après rotation, parallèle à la direction de départ. Une telle solution n'est cependant pas satisfaisante lorsque l'on cherche à obtenir des axes de détection orientés dans le plan (X, Y), symétriquement par rapport à l'axe X. Le même problème se pose avec le capteur de la figure 3. Dans l'exemple de la figure 2, les capteurs de gauche et de droite sont différents, indépendamment de l'élément sensible de détection.

Les figures 5A et 5B montrent un schéma simplifié d'un capteur de détection d'impact selon l'invention, vu en perspective et de côté, respectivement.

En référence à ces figures, le capteur 1 de détection d'impact comprend un pion anti-rotation ou pré-maintien 2, un système de fixation 5 distincts de maintien en position du capteur. Ces systèmes de pré-maintien et de fixation 2, 5 s'étendent dans un plan (X, Y) du capteur. Un tel agencement offre les avantages mentionnés ci-dessus. Le plan (X, Y) est par exemple un plan médian du capteur (selon la direction Z), ce qui permet de prévoir une structure d'accueil symétrique non seulement par rapport à l'axe longitudinal mais également par rapport au plan transverse longitudinal, c'est-à-dire le plan (X, Z).

Pour simplifier l'implantation du capteur sur la structure d'accueil (par exemple agencée dans la caisse du véhicule), on peut en outre prévoir que l'un, au moins, des moyens 2, 5 distincts de maintien en position, par exemple le système de fixation 5,s'étende symétriquement par rapport au plan (X, Y), le cas échéant selon une direction privilégiée. Cette direction peut être la direction Y, c'est-à-dire la direction sensiblement perpendiculaire au plan moyen de la structure d'accueil dans laquelle le capteur doit être implanté, ce qui en facilite l'implantation.

Comme évoqué plus haut, les moyens 2 et 5 comprennent, le cas échéant, un système de positionnement 2 et un système de fixation 5. Le système de positionnement permet de faciliter l'implantation du capteur avant de le fixer. Par exemple, le système de positionnement 2 peut consister en un pion anti-rotation ou de pré-maintien, connu en soi, faisant saillie à l'extérieur du boîtier de capteur. Dans ce cas, le pion s'étend dans le même plan (X, Y) que précédemment, le plan (X, Y) étant un plan de symétrie du pion. De même, le système de fixation 5 peut consister en un système de fixation par vis 5, interne au capteur et débouchant sur deux côtés du boîtier du capteur. De la sorte, le boîtier du capteur peut être fixé par vissage dans la structure d'accueil après son implantation.

Le capteur comprend également un élément sensible de détection d'impact, selon une direction de détection (non représentée sur la figure). Cet élément sensible de détection est, en soi, d'un type connu de l'art, tel qu'un accéléromètre ou un capteur de pression. Il peut par exemple comprendre un élément microélectronique noyé dans une matrice, sensible à une décélération selon une direction de détection. Toutefois, il est agencé dans le capteur de sorte que la direction de détection soit (au moins en partie) dans le plan (X, Y) ou parallèle à ce plan.

Le capteur 1 comprend en outre une connectique 3, connue en soi. Cette connectique s'étend de préférence également dans le plan (X, Y). Le branchement des capteurs peut de la sorte être effectué de façon symétrique, de chacun des côtés du véhicule.

Le boîtier du détecteur 1 peut par exemple présenter une forme globalement parallélépipédique et être fait d'un matériau plastique, comme il est usuel dans l'art.

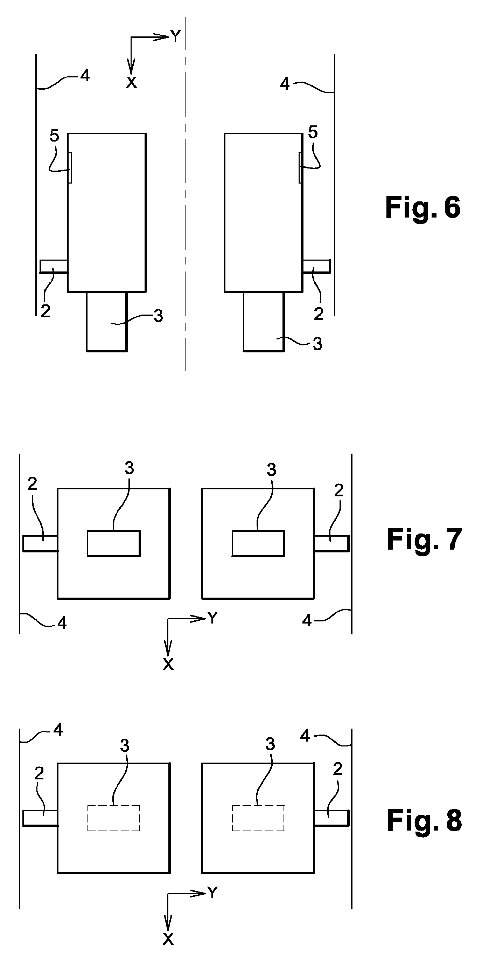

Les figures 6 à 8 montrent des représentations schématiques de capteurs et de structures d'accueil de ces capteurs, selon des modes distincts de réalisation de l'invention. Chacune de ces figures (non à l'échelle) montre deux capteurs selon l'invention, comprenant chacun un pion 2 anti-rotation ou de pré-maintien, une connectique 3 et, le cas échéant, un système 5 de fixation orienté du côté de la structure d'accueil 4 de capteur (par exemple la caisse 4) du véhicule.

En référence à la figure 6, est représenté un capteur muni d'une connectique s'étendant dans le plan (X, Y). Bien que non représentée, la direction de détection d'impact envisagée ici est orientée dans le plan (X, Y). Il apparaît clairement sur la figure qu'une rotation du capteur autour de l'axe longitudinal X permet d'implanter ce capteur d'un côté ou de l'autre du véhicule, sur des structures symétriques par rapport à l'axe longitudinal X. Cette rotation donne lieu à des directions de détections symétriques par rapport à l'axe longitudinal X

Dans l'exemple des figures 7 et 8, les moyens 2 de maintien en position et la connectique 3 s'étendent dans le plan (Y, Z). La direction de détection est par exemple selon Y. Dans ces exemples, une rotation du capteur autour de l'axe Z permet d'implanter ce capteur d'un côté ou de l'autre du véhicule, sur des structures symétriques par rapport à l'axe longitudinal X (et plus généralement, par rapport au plan (X, Z). Cette rotation préserve la direction de détection (pourvu que la direction soit dans le plan X, Y). La connectique 3 peut être en saillie vers le haut du capteur (figure 7) ou vers le bas (figure 8), selon. Dans ces cas (figures 7 et 8), le système de pré-maintien et de fixation sont alignés en Z.

L'invention n'est cependant pas limitée aux variantes décrites ci avant mais est susceptible de nombreuses autres variations aisément accessibles à l'homme du métier. A titre d'exemple, il est possible de prévoir que l'une des faces, une partie d'une face ou encore des coins du boîtier du capteur serve de moyen de maintien en position du capteur (par exemple plutôt que d'utiliser un pion, à condition toutefois de conformer la structure d'accueil du véhicule en conséquence.

## Revendications

1. Capteur (1) de détection d'impact pour véhicule, comprenant :
- un élément de détection d'impact selon une direction de détection;
- au moins deux moyens (2, 5) distincts de maintien en position du capteur ; dans lequel :
- les deux moyens (2, 5) distincts de maintien en position s'étendent dans un plan (X, Y) du capteur ; et
- la direction de détection est dans ce plan (X, Y) ou parallèle à ce plan.

2. Capteur (1) selon la revendication 1, **caractérisé en ce que** le plan (X, Y) est un plan médian du capteur.

3. Capteur (1) selon la revendication 1 ou 2, **caractérisé en ce qu'**il comprend en outre une connectique (3), s'étendant également dans le plan (X, Y).

4. Capteur (1) selon la revendication 1, 2 ou 3, **caractérisé en ce que** l'un, au moins, des moyens (2, 5) distincts de maintien en position s'étendent symétriquement par rapport au plan (X, Y).

5. Capteur (1) selon l'une quelconque des revendications 1 à 4, **caractérisé en ce que** les moyens (2, 5) de maintien en position comprennent :
- des moyens de positionnement (2) ; et
- des moyens de fixation (5).

6. Capteur (1) selon la revendication 5, **caractérisé en ce que** les moyens de positionnement (2) comprennent un pion de centrage ou de pré-maintien.

7. Capteur (1) selon la revendication 5 ou 6, **caractérisé en ce que** les moyens de fixation (5) comprennent un système de fixation par vis comprenant un trou débouchant sur deux côtés du capteur.

8. Capteur (1) selon quelconque des revendications 1 à 7, **caractérisé en ce que** l'élément de détection d'impact est un élément microélectronique noyé dans une matrice, sensible à une décélération selon la direction de détection.

9. Procédé de fabrication d'un véhicule, comprenant une étape de :
- montage de deux capteurs (1) selon l'une quelconque des revendications précédentes, sur des structures d'accueil de capteur respectives d'un véhicule.

10. Le procédé d'assemblage selon la revendication 9, dans lequel les structures d'accueil sont symétriques par rapport à un plan transverse longitudinal du véhicule.
